(19) Europäisches Patentamt
European Patent Office
Office européen des brevets

(11) Veröffentlichungsnummer: **0 278 348 B1**

(12) **EUROPÄISCHE PATENTSCHRIFT**

(45) Veröffentlichungstag der Patentschrift: **15.04.92**

(51) Int. Cl.[5]: **C08L 69/00**, //(C08L69/00, 51:00,71:02)

(21) Anmeldenummer: **88101370.0**

(22) Anmeldetag: **01.02.88**

Die Akte enthält technische Angaben, die nach dem Eingang der Anmeldung eingereicht wurden und die nicht in dieser Patentschrift enthalten sind.

(54) **Antistatische, thermoplastische Formmassen auf Basis von Polycarbonaten und Pfropfcopolymerisaten.**

(30) Priorität: **13.02.87 DE 3704488**

(43) Veröffentlichungstag der Anmeldung:
**17.08.88 Patentblatt 88/33**

(45) Bekanntmachung des Hinweises auf die Patenterteilung:
**15.04.92 Patentblatt 92/16**

(84) Benannte Vertragsstaaten:
**DE ES FR GB IT NL**

(56) Entgegenhaltungen:
**EP-A- 0 061 692**
**EP-A- 0 210 510**

**PATENT ABSTRACTS OF JAPAN, Band 10, Nr. 239 (C-367)[2295], 19. August 1986; & JP-A-61 72 053 (TEIJIN CHEM. LTD) 14-04-1986**

**PATENT ABSTRACTS OF JAPAN, Band 8, Nr. 266 (C-255)[1703], 6. Dezember 1984; & JP-A-59 142 243 (TORAY K.K.) 15-08-1984**

**PATENT ABSTRACTS OF JAPAN, Band 10, Nr. 49 (C-330)[2106], 26. Februar 1986; & JP-A-60 195 151 (TORAY K.K.) 03-10-1985**

**Römpps Chemie Lexikon, Band 5, Seite 3276**

(73) Patentinhaber: **BAYER AG**

**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Schön, Norbert, Dr.**
**Wilhelmshofallee 82**
**W-4150 Krefeld(DE)**
Erfinder: **Eichenauer, Herbert, Dr.**
**Goethestrasse 71**
**W-4047 Dormagen(DE)**
Erfinder: **Kress, Hans-Jürgen, Dr.**
**c/o Mobay Corporation Mobay Road**
**Pittsburgh, PA 15205(US)**
Erfinder: **Buekers, Josef**
**Kneinstrasse 58a**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der Erfindung sind antistatische, thermoplastische Formmassen, bestehend aus einem thermoplastischen aromatischen Polycarbonatharz, einem Pfropfpolymerisat und gegebenenfalls einem thermoplastischen Vinylpolymerisat auf Basis von Vinylaromaten und anderen Vinylmonomeren, die als antistatisches Mittel einen durch einen Radikalbildner modifizierten Polyether enthalten.

Die meisten Kunststoffe sind aufgrund ihrer chemischen Konstitution elektrische Isolatoren mit einem hohen elektrischen Oberflächenwiderstand. Das führt bei der Verarbeitung und im Gebrauch solcher Massen leicht zur elektrostatischen Aufladung der Kunststoffoberflächen. Die Folge sind vielfältige Störungen und Belästigung in der Praxis, z.B. schnelle Verschmutzung und Verstaubung der Kunststoffteile, wobei sich charakteristische Staubfiguren an der Oberfläche ausbilden. Dies gilt im besonderen Maß auch für gegebenenfalls kautschukmodifizierte als Formmassen verwendete Polymerisate aus Vinylaromaten und Acrylnitril, z.B. Styrol-Acrylnitril-Copolymerisate (SAH) und Pfropfpolymerisate von Styrol und Acrylnitril auf Polybutadien (ABS).

Die antistatische Ausrüstung solcher Formmassen ist bekannt. Als antistatische Mittel werden z.B. Alkyl- und Arylsulfonate (DE-OS 1 544 652), Amine (DE-PS 1 258 083), quartäre Ammoniumsalze, Amide, Phosphorsäuren sowie Alkyl- und Arylphosphonate empfohlen.

Polyether, wie z.B. in DE-PS 1 244 398, als hochmolekulare Antistatika vorgeschlagen, müssen zur sicheren Antistatikausrüstung von Styrolpolymerisaten in Mengen von ca. 5 Gew.-% oder mehr eingesetzt werden. Das führt zu fleckigen und schmierigen Oberflächen bis hin zu Oberflächenbelägen auf den Kunststoff-Fertigteilen.

Die obengenannten Antistatika für Vinylaromaten-Polymerisate können in Gemischen aus diesen Vinylpolymerisaten und aromatischen Polycarbonaten nicht eingesetzt werden, da sie entweder zum Abbau des aromatischen Polycarbonats führen oder zu wenig wirksam sind.

Weiterhin beschreibt JP-A 61-72 053 antistatisch ausgerüstete Zusammensetzungen, enthaltend eine Polycarbonatkomponente, ein Pfropfcopolymerisat und ein Polyether. Aus EP-A 61 692 ist bekannt, daß thermoplastische Formmassen, enthaltend Pfropfcopolymerisate durch den Zusatz von gepfropften Polyethern antistatisch ausgerüstet werden.

Es wurde nun gefunden, daß man durch Behandlung von Polyalkylenethern mit radikalbildenden Substanzen sehr gut wirksame Antistatika für Mischungen aus aromatischen Polycarbonaten und Vinylaromatpolymerisaten erhält, die die mechanischen Eigenschaften, die Oberflächeneigenschaften, Farbe und Thermostabilität der Vinylaromatpolymerisate nicht beeinträchtigen. Die Antistatikwirkung ist insbesondere gegenüber unmodifizierten Polyalkylenethern stark verbessert.

Gegenstand der Erfindung sind somit antistatische, thermoplastische Formmassen bestehend aus

I. 99,8 - 95 Gew.-%, bevorzugt 99 - 97 Gew.-%, einer Mischung bestehend aus einem aromatischen Polycarbonat, einem Pfropfpolymerisat und gegebenenfalls einem thermoplastischen Vinylpolymerisat und/oder den üblichen Zusätzen und

II 0,2 bis 5 Gew.-% eines Polyalkylenethers, der mit 5 bis 0,05 Gew.-% (bezogen auf die Menge an Polyalkylenether) eines Radikalbildners modifiziert ist, der bei Temperaturen zwischen 20 und 200 °C ausreichend schnell in Radikale zerfällt, wobei die zu modifizierenden Polyalkylenether Reaktionsprodukte aus Polyolen und einem oder mehreren Alkylenoxiden sind und Molekulargewichte zwischen 500 und 15.000 besitzen,

wobei das Polymergemisch I aus

A) 95 bis 10 Gew.-% eines thermoplastischen aromatischen Polycarbonats oder eines Gemisches mehrerer aromatischer Polycarbonate mit mittleren Gewichtsmittelmolekulargewichten $\overline{M}_W$ von 10.000 bis 200.000 auf Basis der Diphenole der Formel (II)

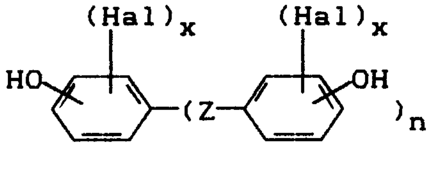

(II),

worin Z eine Einfachbindung, ein $C_1$-$C_5$-Alky-lenrest, ein $C_2$-$C_5$-Alkylidenrest, ein $C_5$-$C_6$-Cycloalkylidenrest, -S-oder $S0_2$-, Hal, Chlor oder Brom, x 0, 1 oder 2 und n 1 oder 0 sind, und gegebenenfalls

der Formel (IIa)

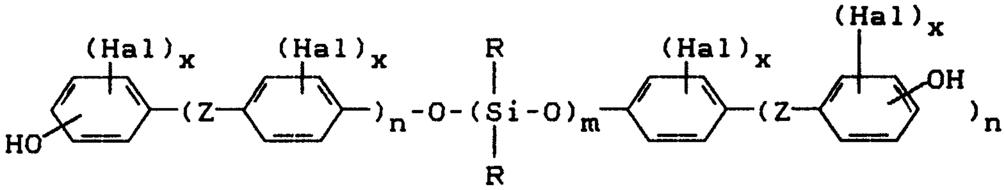

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist und wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-% ist, bezogen jeweils auf das Gesamtgewicht der Diphenole der Formeln (II) und (IIa),

B) 5 bis 90 Gew.-% eines Gemisches aus

Ba) 100 bis 20 Gew.-Teilen eines oder mehrerer Pfropfpolymerisate, in denen auf einen Kautschuk (Pfropfgrundlage) Styrol, α-Methylstyrol, Methylmethacrylat oder ein Gemisch von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind und wobei die Kautschuke in Form wenigstens partiell vernetzter Teilchen einer mittleren Teilchengröße von 0,05 bis 5 µm vorliegen, und

Bb) 0 bis 80 Gew.-Teilen eines oder mehrerer thermoplastischer Vinylcopolymerisate

besteht.

Ein weiterer Gegenstand der Erfindung ist ein Verfahren zur antistatischen Ausrüstung von Mischungen aus aromatischem Polycarbonat, einem Pfropfpolymerisat und gegebenenfalls einem thermoplastischen Vinylpolymerisat, wie oben beschrieben und/oder den üblichen Zusätzen, das dadurch gekennzeichnet ist, daß man zu 99,8 bis 95 Gew.-% einer Mischung I 0,2 bis 5,0 Gew.-%, vorzugsweise 1 bis 3 Gew.-% eines antistatischen Mittels aus Polyalkylenether zufügt, der mit 5 bis 0-05 Gew.-% (bezogen auf die Menge an Polyalkylenether) eines Radikalbildners modifiziert ist und der Radikalbildner zwischen 20 und 200 °C ausreichend schnell in Radikale zerfällt, wobei die zu modifizierenden Polyalkylenether Reaktionsprodukte aus Polyolen und einem oder mehreren Alkylenoxiden sind und Molekulargewichte zwischen 500 und 15.000 besitzen.

Das Polymergemisch I im Sinne der Erfindung besteht aus

A) 95 - 10 Gew.-%, bevorzugt 90 - 10 Gew.-% und besonders bevorzugt 85 - 25 Gew.-% eines thermoplastischen aromatischen Polycarbonats oder eines Gemisches mehrerer aromatischer Polycarbonate,

B) 5 - 90 Gew.-%, bevorzugt 10 - 90 Gew.-% und besonders bevorzugt 15 - 75 Gew.-% eines Gemisches aus

Ba) 100 - 0 Gew.-Teilen, bevorzugt 100 - 20 Gew.-Teilen und besonders bevorzugt 100 - 30 Gew.-Teilen eines oder mehrerer Pfropfpolymerisate und

Bb) 0 - 100 Gew.-Teilen, bevorzugt 0 - 80 Gew.- Teilen und besonders bevorzugt 0 - 70 Gew.-Teilen eines oder mehrerer thermoplastischer Vinylcopolymerisate.

Erfindungsgemäß geeignete, thermoplastische, aromatische Polycarbonate A sind solche auf Basis der Diphenole der Formel (II)

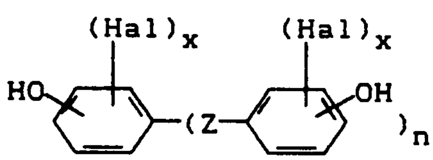

(II),

worin Z eine Einfachbindung, ein $C_1$-$C_5$-Alkylenrest, ein $C_2$-$C_5$-Alkylidenrest, ein $C_5$-$C_6$-Cycloalkylidenrest,

-S-oder $-SO_2-$, Hal, Chlor oder Brom, x 0, 1 oder 2 und n 1 oder 0 sind, und gegebenenfalls der Formel (IIa)

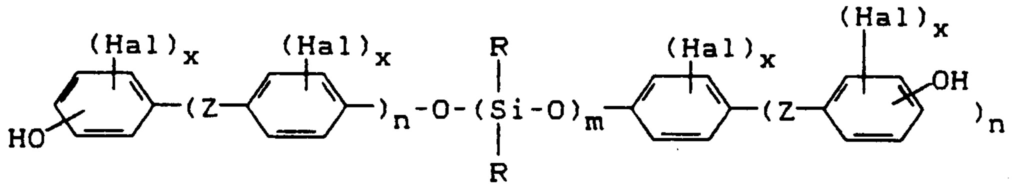

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$, bedeuten und m eine ganze Zahl von 5 bis 100, vorzugsweise 20 bis 80, ist.

Erfindungsgemäß geeignete Polycarbonate A sind Homopolycarbonate und Copolycarbonate, wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-%, vorzugsweise 1,5 bis 15 Gew.-% und insbe sondere 2 bis 10 Gew.-% ist bezogen jeweils auf Gesamtgewicht der Diphenole der Formeln (II) und (IIa).

Die Komponente A kann auch aus Mischungen der vorstehend definierten thermoplastischen Polycarbonate bestehen wobei, wenn es sich um Mischungen mit Polydiorganosiloxanen-Polycarbonat-Blockcopolymeren handelt, der Gewichtsanteil der Diphenole (IIa), bezogen auf die Gesamtsumme der Diphenole in der Polycarbonatmischung, zwischen 1 und 20 Gew.-% liegt.

Die erfindungsgemäß geeigneten Polycarbonate A sind bekannt, sie können beispielsweise mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch bekannte Kettenabbrecher eingestellt werden kann. (Für polydiorganosiloxanhaltigen Polycarbonaten siehe DE-OS 3 334 873.)

Geeignete Kettenabbrecher sind beispielsweise Phenol, p-Chlorphenol, p-tert.-Butylphenol oder 2,4,6-Tribromphenol, und langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472 wie 3,5-Di-tert.-butylphenol, p-iso-Octyl phenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Summe der jeweils eingesetzten Diphenole (II) und gegebenenfalls (IIa).

Die erfindungsgemäß geeigneten Polycarbonate A haben mittlere Gewichtsmittelmolekulargewichte ($\overline{M}w$, gemessen beispielsweise durch Ultrazentrifugation oder Streulichtmessung) von 10 000 bis 200 000, vorzugsweise von 20 000 bis 80 000.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-(hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (IIa) sind solche, in denen R Methyl, Ethyl, Propyl, n-Butyl, tert.-Butyl oder Phenyl ist.

Bevorzugte Diphenole der Formel (IIa) sind die der Formel (IIb)

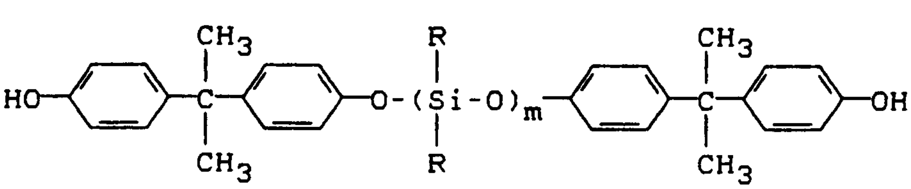 (IIb)

worin die Reste R gleich sind und die vorstehend genannte Bedeutung haben, also bevorzugt Methyl etc. oder Phenyl bedeuten und m eine ganze Zahl von 5 bis 100, vorzugsweise von 20 bis 80, ist.

Die Diphenole der Formel (IIa) können aus den entsprechenden Bis-Chlorverbindungen (III)

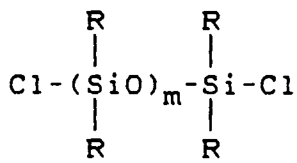

(III)

und den Diphenolen (II) beispielsweise gemäß US-Patent 3 419 634, in Kombination mit US-Patent 3 189 662 hergestellt werden.

In den Bis-Chlorverbindungen (III) haben R und m die Bedeutung wie in den Diphenolen (IIa) bzw. (IIb).

Die erfindungsgemäß geeigneten Polycarbonate A können in bekannter Weise verzweigt sein, vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan oder die Copolycarbonate der Diphenole der Formel (II) mit 1 bis 20 Gew.-% an Diphenolen der Formel (IIa), vorzugsweise der Formel (IIb), bezogen jeweils auf die Gewichtssumme der Diphenole (II) und (IIa), bzw. (II) und (IIb).

Geeignete Pfropfpolymerisate Ba sind solche, in denen auf einen Kautschuk (Pfropfgrundlage) Styrol, α-Methylstyrol, Methylmethacrylat oder ein Gemisch von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind.

Zur Herstellung der Pfropfpolymerisate Ba geeignete Kautschuke sind insbesondere Polybutadien, Butadien/Styrol-Copolymerisate (beide auch copolymerisiert mit bis zu 30 Gew.-%, bezogen auf Kautschukgewicht, eines niederen Alkylesters von Acryl-oder Methacrylsäure wie Methylmethacrylat, Ethylacrylat, Methylacrylat oder Ethylmethacrylat) Polyisopren, Polychloropren, Alkylacrylatkautschuke (aus $C_1$-$C_8$-Alkylacrylaten, insbesondere Ethyl-, Butyl-, Ethylhexylacrylat). Die Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten, sowie kleinere Mengen, vorzugsweise bis zu 5 Gew.-%, bezogen auf Kautschukgewicht, vernetzend wirkender, ethylenisch ungesättigter Monomerer. Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien oder Isopren. Als Acrylatkautschuke kommen auch solche infrage, die einen vernetzten Dienkautschuk aus einem oder mehreren konjugierten Dienen und gegebenenfalls einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dien.

Bevorzugte Kautschuke zur Herstellung der Pfropfpolymerisate Ba sind Dien- und Alkylacrylatkautschuke.

Acrylatkautschuke sind besonders vorteilhaft, wenn sie eine Kern-Mantel-Struktur aufweisen, d.h. einen Kern aus einem anderen Polymerisat enthalten, der von einer Hülle aus vernetztem Alkylacrylatkautschuk umgeben ist.

Die Kautschuke liegen im Pfropfpolymerisat Ba in Form wenigstens partiell vernetzter Teilchen einer mittleren Teilchengröße von 0,05 bis 5 μm, insbesondere 0,075 bis 1 μm vor und besitzen Gelgehalte von bevorzugt wenigstens 70 Gew.-%.

Die Pfropfpolymerisate Ba werden durch radikalische Pfropfpolymerisation in Emulsion, Lösung, Masse oder Suspension der eingangs genannten Monomerengemische in Gegenwart dieser Kautschuke hergestellt.

Die Pfropfauflage des Pfropfproduktes Ba aus den obengenannten Polymergemischen wird beispielsweise durch Polymerisation der entsprechenden Monomeren in Gegenwart eines Latex (Emulsion) der Pfropfgrundlage erzeugt. Die Polymerisation kann durch Radikalinitiatoren initiiert werden, z.B. mit Persulfaten, Peroxiden, Percarbonaten, Perestern, insbesondere aber mit wasserlöslichen Initiatoren wie Persulfaten oder Redoxinitiatorsystemen. Diese Polymerisationsverfahren sind bekannt.

Bevorzugte Pfropfauflagen werden erhalten durch Pfropfpolymerisation einer Monomermischung aus 50 bis 95 Gew.-Teilen Styrol, α-Methylstyrol, kernsubstituiertem Styrol, Methylmethacrylat oder Mischungen daraus, und 50 bis 5 Gew.-Teilen (Meth)-Acrylnitril, Methylmethacrylat, Maleinsäureanhydrid, N-substituiertem Maleinimid oder Mischungen daraus.

Bevorzugte Copolymerisate Bb sind solche aus Styrol, α-Methylstyrol, kernsubstituiertem Styrol oder Mischungen daraus mit Acrylnitril, Methacrylnitril, Methylmethacrylat, Maleinsäureanhydrid, N-substituiertem Maleinimid oder Mischungen daraus.

Thermoplastische Copolymerisate mit einer Zusammensetzung gemäß Bb entstehen häufig bei der Pfropfpolymerisation zur Herstellung der Komponente Ba als Nebenprodukte, besonders dann, wenn große Mengen Monomere auf kleine Mengen Kautschuk gepfropft werden.

Die erfindungsgemäß einzusetzende Menge an Copolymerisat Bb von 0 bis 80 Gew.-Teilen, vorzugsweise 0 bis 70 Gew.-Teilen, bezogen auf 100 Gew.-Teile aus A + Ba + Bb, bezieht dieses Nebenprodukt der Pfropfpolymerisation nicht mit ein.

Die Copolymerisate gemäß Komponente Bb sind harzartig, thermoplastisch und kautschukfrei. Besonders bevorzugte Copolymerisate Bb sind solche aus Styrol und/oder α-Methylstyrol mit Acrylnitril und gegebenenfalls mit Methylmethacrylat.

Als kernsubstituierte Styrole seien Halogenstyrole und p-Methylstyrol erwähnt.

Besonders bevorzugte Gewichtsverhältnisse im thermoplastischen Copolymerisat Bb sind 60 bis 80 Gew.% Styrol und/oder α-Methylstyrol und 40 bis 20 Gew.-% Acrylnitril bzw. Methylmethacrylat.

Die Copolymerisate gemäß Komponente Bb sind bekannt und lassen sich durch radikalische Polymerisation, insbesondere durch Emulsions-, Suspensions-, Lösungs- oder Massepolymerisation herstellen. Die Copolymerisate gemäß Komponente Bb besitzen vorzugsweise Molekulargewichte $\overline{M}w$ (Gewichtsmittel, ermittelt durch Lichtstreuung oder Sedimentation) zwischen 15 000 und 200 000 und Grenzviskositäten zwischen 20 und 110 ml/g (gemessen in Dimethylformamid bei 25 °C).

Die modifizierten Polyether (II) im Sinne der Erfindung werden durch Behandlung von Polyethern mit Radikalbildnern hergestellt.

Die erfindungsgemäß zu modifizierenden Polyalkylenether ("Ausgangs-Polyether") sind aus di- und polyfunktionellen (cyclo)aliphatischen Resten aufgebaut und können in geringem Maße auch olefinische Gruppen enthalten. Geeignet sind Reaktionsprodukte aus Di-oder Polyolen, wie Ethyleneglykol, 1,2-Propylenglykol, Trimethylolpropan, Glycerin, Pentaerythrit, Sorbit und Mannit, und einem oder mehreren Alkylenoxiden, wie Ethylenoxid und Propylenoxid. (Herstellung und Verwendung siehe Ullmanns Encyklopädie der technischen Chemie, 4. Aufl., Bd. 19, S. 31, Verlag Chemie, Weinheim 1980). Dabei werden Polyalkylenglykole mit hohen Anteilen an 1,2-Propylenstrukturen bevorzugt.

Es können sowohl lineare als auch verzweigte Polyalkylenether verwendet werden, wobei mäßig verzweigte Typen bevorzugt werden.

Die "Ausgangs"-Polyalkylenether besitzen Molekulargewichte zwischen 500 und 15.000, bevorzugt zwischen 1000 und 10.000 und besonders bevorzugt zwischen 2000 und 5000.

Als radikalbildende Substanzen kommen als Initiatoren für die radikalische Polymerisation handelsübliche Verbindungen sowie alle sonstigen Verbindungen in Frage, die bei Temperaturen zwischen 20 und 200 °C ausreichend schnell in Radikale zerfallen. So kann man beispielsweise Diacylperoxide wie Dibenzoylperoxid, substituierte Dibenzoylperoxide und Dilauroylperoxid, Acylsulfonylperoxide wie Acetylcyclohexansulfonylperoxid, Peroxydicarbonate wie Dicyclohexyl- und Di-tert.-butylperoxydicarbonat, Acylperester wie tert.-Butylperpivalat und tert.-Butylperbenzoat, Dialkylperoxide wie Dicumyl- und Ditert.-butylperoxid, Hydroperoxide wie Cumylhydroperoxid und tert.-Butylhydroperoxid und andere Peroxyverbindungen sowie aliphatische und araliphatische Azoverbindungen einsetzen. Bevorzugte Radikalbildner zerfallen ausreichend schnell bei Temperaturen von 60 - 140 °C, z. B. Azodiisobutyronitril, Di-tert.-butylperoxid, Dibenzoylperoxid, tert.-Butylperbenzoat, Dicumylperoxid und 1,3-Bis-(tert.-butylperoxyisopropyl)benzol. Besonders bevorzugt wird Dibenzoylperoxid verwendet.

Die Menge der Radikalbildner bezogen auf die Menge an Polyalkylenether beträgt 5 - 0,05 Gew.-%, bevorzugt 2,0 - 0,1 Gew.-% und besonders bevorzugt 1,0 - 0,25 Gew.-%.

Die erfindungsgemäßen modifizierten Polyalkylenether kann man durch einfaches Rühren des Radikalbildners mit dem jeweiligen Polyalkylenether bei Temperaturen zwischen 50 und 150 °C herstellen.

Die so erhaltenen modifizierten Polyalkylenether können nach bekannten Methoden z. B. durch gemeinsames Kneten, Verwalzen oder Extrudieren in die auszurüstenden Polymeren eingearbeitet werden.

In einer weiteren Ausführungsform der Erfindung kann auch eine Mischung aus einem erfindungsgemäß zu verwendenden Radikalbildner und einem erfindungsgemäß zu verwendenden Polyether in den angegebenen Verhältnissen in das auszurüstende Polymere unter den üblichen Verarbeitungsbedingungen, z. B. in einem Kneter oder Extruder bei 160 - 220 °C eingearbeitet werden.

Neben den erfindungsgemäßen Antistatika können den Formmassen die üblichen Zusätze wie z. B. Pigmente, Füllstoffe, Stabilisatoren, Gleitmittel, Entformungsmittel und dergleichen zugesetzt werden.

Die so erhaltenen erfindungsgemäßen Formmassen werden mit den für Thermoplaste üblichen Methoden zu Fertigteilen z. B. Gehäuseteilen für Haushalts- und Elektrogeräte, Profilteilen, Folien, Automobilinnenausstattungen etc. verarbeitet.

Die fertigen Formteile zeichnen sich durch hervorragendes antistatisches Verhalten und insbesondere durch belagfreie, homogene und glänzende Oberflächen aus. Die mechanischen Eigenschaften, speziell die Wärmeformbeständigkeit und die Schlagzähigkeit, auch bei tiefen Temperaturen, sind im Vergleich zum unmodifizierten Material praktisch nicht beeinträchtigt. Ebensowenig wird die Farbe der Formteile beeinflußt.

Beispiele

Polymerisate zur Herstellung von Polymergemisch I:

A) Durch Emulsionspolymerisation hergestellter Pfropfkautschuk aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft worden sind.

B) Styrol/Acrylnitril (SAN) = 72:28-Copolymerisat mit einem $\overline{M}_w$ von ca. 80 000 mit $M_w/M_n - 1 \leqq 2$.

C) Aromatisches Polycarbonat aus 2,2-Bis-(4-hydroxyphenyl)-propan (Bisphenol A) mit einer relativen Viskosität von 1,26, gemessen in $CH_2Cl_2$ bei 25° C (0,5 gew.-%ige Lösung).

Beispiel 1

1,00 kg einer linearen Polypropylenglykols mit $M_n$ = 2000 (OH-Zahl = 56) wurden i. Vak. unter Erhitzen auf 120° C entgast und mit Stickstoff gesättigt. Bei einer Temperatur <40° C gibt man 6,6 g käufliches Dibenzoylperoxid zu und erhitzt die Mischung unter Stickstoffatmosphäre 8 h lang auf 80 - 85° C.

Beispiel 2

24 Gew.-Teile Polymer A, 16 Gew.Teile Polymer B, 60 Gew.-Teile Polymer C, 1 Gew.-Teil Pentaerythrit tetrastearat und 1,5 Gew.-Teile des in Beispiel 1 beschriebenen Antistatikums wurden in einem Innenkneter bei 200° C miteinander vermischt. Das erhaltene Material wurde granuliert und bei 260° C durch Spritzgießen zu Probekörpern verarbeiten.

Folgende Daten wurden erhalten:
$a_k$ bei Raumtemperatur nach DIN 53 453: 22,8 kJ/m²
Vicat B nach DIN 53 460: 116° C
MFI 260/5 nach DIN 53 735: 16,0 g/10 Min.
Staubfiguren: kein Belag

Beispiel 3 zum Vergleich

Die in Beispiel 2 beschriebene Mischung aus Polymeren und Gleitmittel wurde ohne Zusatz von Polyether wie dort angegeben verarbeitet. Als Prüfdaten wurden erhalten:
$a_k$ bei Raumtemperatur nach DIN 53 453: 25,9 kJ/m²
Vicat B nach DIN 53 460: 118° C
MFI 260/5 nach DIN 53 735: 12,9 g/10 Min.
Staubfiguren: starker Belag.

Wie aus den Beispielen 2 und 3 ersichtlich ist, führt der Zusatz der erfindungsgemäßen Polyether neben der ausgezeichneten Antistatik-Wirksamkeit zu einer deutlich verbesserten Fließfähigkeit.

**Patentansprüche**
**Patentansprüche für folgende Vertragsstaaten : DE, FR, GB, IT, NL**

**1.** Thermoplastische Formmassen aus
I 99,8 - 95 Gew.-% einer Mischung bestehend aus einem aromatischen Polycarbonat, einem Pfropfpolymerisat und gegebenenfalls einem thermoplastischen Vinylpolymerisat und/oder den üblichen Zusätzen und

II 0,2 bis 5 Gew.-% eines Polyalkylenethers, der mit 5 bis 0,05 Gew.-% (bezogen auf die Menge an Polyalkylenether eines Radikalbildners modifiziert ist, der bei Temperaturen zwischen 20 und 200 ° C ausreichend schnell in Radikale zerfällt, wobei die zu modifizierenden Polyalkylenether Reaktionsprodukte aus Polyolen und einem oder mehreren Alkylenoxiden sind und Molekulargewichte zwischen 500 und 15.000 besitzen und wobei das Polymergemisch I aus

A) 95 bis 10 Gew.-% eines thermoplastischen aromatischen Polycarbonats oder eines Gemisches mehrerer aromatischer Polycarbonate mit mittleren Gewichtsmittelmolekulargewichten $\overline{M}_w$ von 10.000 bis 200.000 auf Basis der Diphenole der Formel (II)

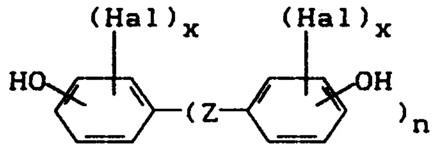

(II),

worin Z eine Einfachbindung, ein $C_1$-$C_5$-Alkylenrest, ein $C_2$-$C_5$-Alkylidenrest, ein $C_5$-$C_6$-Cycloalkylidenrest, -S-oder -$SO_2$-, Hal, Chlor oder Brom, x 0, 1 oder 2 und n 1 oder 0 sind, und gegebenenfalls der Formel (IIa)

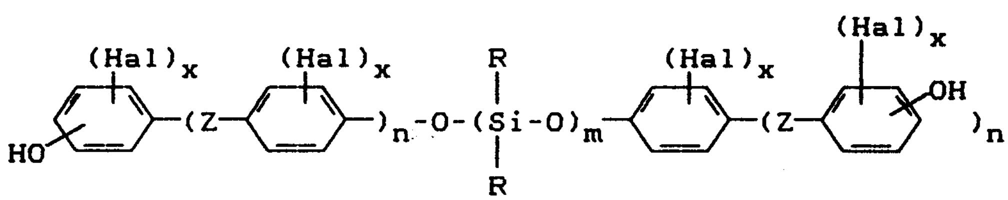

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist und wobei die Diphenole der Formel (IIa) nur für die Herstellung von Copolycarbonaten mit den Diphenolen der Formel (11) eingesetzt werden, und ihr Gewichtsanteil in den Copolycarbonaten 1 bis 20 Gew.-% ist, bezogen jeweils auf das Gesamtgewicht der Diphenole der Formeln (II) und (IIa),

B) 5 bis 90 Gew.-% eines Gemisches aus

Ba) 100 bis 20 Gew.-Teilen eines oder mehrerer Pfropfpolymerisate, in denen auf einen Kautschuk (Pfropfgrundlage) Styrol, $\alpha$-Methylstyrol, Methylmethacrylat oder ein Gemisch von 95 bis 50 Gew.-% Styrol, $\alpha$-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind und wobei die Kautschuke in Form wenigstens partiell vernetzter Teilchen einer mittleren Teilchengröße von 0,05 bis 5 $\mu$m vorliegen, und

Bb) 0 bis 80 Gew.-Teilen eines oder mehrerer thermoplastischer Vinylcopolymerisate besteht.

**2.** Verfahren zur antistatischen Ausrüstung von Mischungen aus aromatischem Polycarbonat, einem Pfropfpolymerisat und gegebenenfalls einem thermoplastischen Vinylpolymerisat und/oder den üblichen Zusätzen gemäß Anspruch 1, dadurch gekennzeichnet, daß man zu 99,8 bis 95 Gew.-% einer Mischung I 0,2 bis 5 Gew.-% eines Polyalkylenethers, der mit 5 bis 0,05 Gew.-% (bezogen auf die Menge an Polyalkylenether) eines Radikalbildners modifiziert ist, zufügt und der Radikalbildner bei Temperaturen zwischen 20 und 200 ° C ausreichend schnell in Radikale zerfällt, wobei die zu modifizierenden Polyalkylenether Reaktionsprodukte aus Polyolen und einem oder mehreren Alkylenoxiden sind und Molekulargewichte zwischen 500 und 15.000 besitzen.

**Patentansprüche für folgenden Vertragsstaat : ES**

**1.** Verfahren zur antistatischen Ausrüstung von Mischungen I bestehend aus

A) 95 bis 10 Gew.-% eines thermoplastischen aromatischen Polycarbonats oder eines Gemisches mehrerer aromatischer Polycarbonate mit mittleren Gewichtsmittelmolekulargewichten $\overline{M}_W$ von 10.000 bis 200.000 auf Basis der Diphenole der Formel (II)

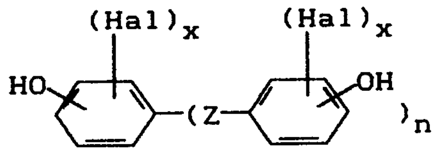

(II),

worin Z eine Einfachbindung, ein $C_1$-$C_5$-Alkylenrest, ein $C_2$-$C_5$-Alkylidenrest, ein $C_5$-$C_6$-Cycloalkylidenrest, -S-oder -$SO_2$-, Hal, Chlor oder Brom, x 0, 1 oder 2 und n 1 oder 0 sind, und gegebenenfalls der Formel (IIa)

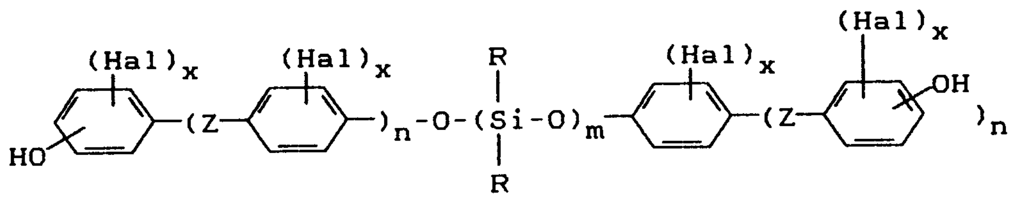

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist und wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-% ist, bezogen jeweils auf das Gesamtgewicht der Diphenole der Formeln (II) und (IIa),

B) 5 bis 90 Gew.-% eines Gemisches aus

Ba) 100 bis 20 Gew.-Teilen eines oder mehrerer Pfropfpolymerisate, in denen auf einen Kautschuk (Pfropfgrundlage) Styrol, α-Methylstyrol, Methylmethacrylat oder ein Gemisch von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind und wobei die Kautschuke in Form wenigstens partiell vernetzter Teilchen einer mittleren Teilchengröße von 0,05 bis 5 µm vorliegen, und

Bb) 0 bis 80 Gew.-Teilen eines oder mehrerer thermoplastischer Vinylcopolymerisate

und/oder den üblichen Zusätzen besteht, wobei man zu 99,8 bis 95 Gew.-% einer Mischung I 0,2 bis 5 Gew.-% eines Polyalkylenethers II zufügt, der mit 5 bis 0,05 Gew.-% (bezogen auf die Menge an eines Radikalbildners modifiziert ist, und wobei der Radikalbildner bei Temperaturen zwischen 20 und 200 °C ausreichend schnell in Radikale zerfällt, wobei die zu modifizierenden Polyalkylenether Reaktionsprodukte aus Polyolen und einem oder mehreren Alkylenoxiden sind und Molekulargewichte zwischen 500 und 15.000 besitzen.

## Claims

### Claims for the following Contracting States : DE, FR, GB, IT, NL

**1.** Thermoplastic moulding compounds of

I 99.8 to 95% by weight of a mixture consisting of an aromatic polycarbonate, a graft polymer and optionally a thermoplastic vinyl polymer and/or the usual additives and

II 0.2 to 5% by weight of a polyalkylene ether modified with 5 to 0.05% by weight (based on the quantity of polyalkylene ether) of a radical former which decomposes into radicals sufficiently quickly at temperatures of 20 to 200 °C, the polyalkylene ethers to be modified being reaction products of polyols and one or more alkylene oxides and having molecular weights of 500 to 15,000 and

polymer mixture I consisting of

A) 95 to 10% by weight of a thermoplastic aromatic polycarbonate or of a mixture of several aromatic polycarbonates having average weight average molecular weights $\overline{M}_W$ of 10,000 to 200,000 based on diphenols corresponding to formula II

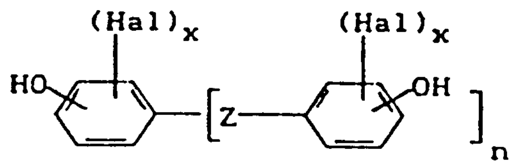

(II)

in which Z is a single bond, a $C_{1-5}$ alkylene radical, a $C_{2-5}$ alkylidene radical, a $C_{5-6}$ cycloalkylidene radical, -S- or $-SO_2-$ Hal is chlorine or bromine, x = 0, 1 or 2 and n = 1 or 0, and optionally to formula (IIa)

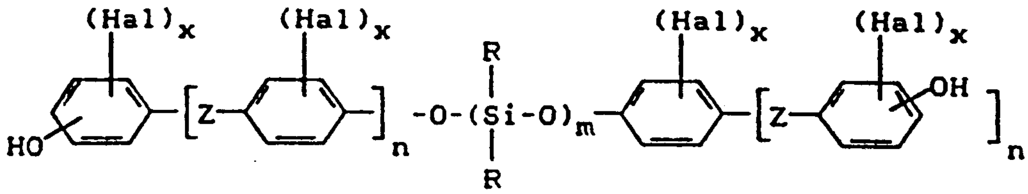

in which Z, Hal, x and m are as defined for formula (II) and the substituents R may be the same or different and represent linear $C_{1-20}$ alkyl, branched $C_{3-20}$ alkyl, $C_{6-20}$ aryl and m is an integer of 5 to 100; the diphenols corresponding to formula (IIa) are only used for the production of copolycarbonates with the diphenols corresponding to formula (II) and their percentage by weight in the copolycarbonates is from 1 to 20% by weight, based on the total weight of the diphenols corresponding to formulae (II) and (IIa),

B) 5 to 90% by weight of a mixture of

Ba) 100 to 20 parts by weight of one or more graft polymers in which styrene, α-methyl styrene, methyl methacrylate or a mixture of 95 to 50% by weight styrene, α-methyl styrene, nucelus-substituted styrene, methyl methacrylate or mixtures thereof and 5 to 50% by weight acrylonitrile, methacrylonitrile, maleic anhydride, N-substituted maleic imide, methyl methacrylate or mixtures thereof (graft shell) is grafted onto a rubber (graft base), the rubbers being present in the form of at least partly crosslinked particles having an average particle size of 0.05 to 5 µm,

Bb) 0 to 80 parts by weight of one or more thermoplastic vinyl copolymers.

**2.** A process for the antistatic treatment of mixtures of aromatic polycarbonate, a graft polymer and optionally a thermoplastic vinyl polymer and/or the usual additives according to claim 1, characterized in that 0.2 to 5% by weight of a polyalkylene ether modified with 5 to 0.05% by weight (based on the quantity of polyalkylene ether) is added to 99.8 to 95% by weight of a mixture I and the radical former decomposes into radicals sufficiently quickly at temperatures of 20 to 200 °C, the polyalkylene ethers to be modified being reaction products of polyols and one or more alkylene oxides and having molecular weights of 500 to 15,000.

**Claim for the following Contracting State : ES**

**1.** A process for the antistatic treatment of mixtures I consisting of

A) 95 to 10% by weight of a thermoplastic aromatic polycarbonate or of a mixture of several aromatic polycarbonates having average weight average molecular weights $\overline{M}_W$ of 10,000 to 200,000 based on diphenols corresponding to formula II

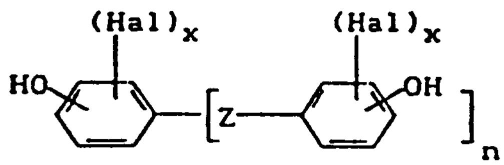

(II)

in which Z is a single bond, a $C_{1-5}$ alkylene radical, a $C_{2-5}$ alkylidene radical, a $C_{5-6}$ cycloalkylidene radical, -S- or $SO_2$-, Hal is chlorine or bromine, x = 0, 1 or 2 and n = 1 or 0, and optionally to formula (IIa)

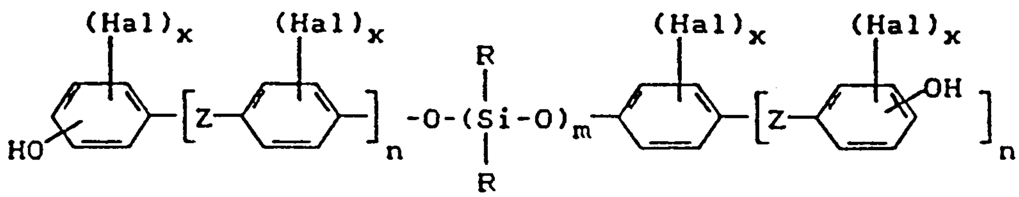

in which Z, Hal, x and m are as defined for formula (II) and the substituents R may be the same or different and represent linear $C_{1-20}$ alkyl, branched $C_{3-20}$ alkyl, $C_{6-20}$ aryl and m is an integer of 5 to 100; the diphenols corresponding to formula (IIa) are only used for the production of copolycarbonates with the diphenols corresponding to formula (II) and their percentage by weight in the copolycarbonates is from 1 to 20% by weight, based on the total weight of the diphenols corresponding to formulae (II) and (IIa),

B) 5 to 90% by weight of a mixture of

Ba) 100 to 20 parts by weight of one or more graft polymers in which styrene, α-methyl styrene, methyl methacrylate or a mixture of 95 to 50% by weight styrene, α-methyl styrene, nucelus-substituted styrene, methyl methacrylate or mixtures thereof and 5 to 50% by weight acrylonitrile, methacrylonitrile, maleic anhydride, N-substituted maleic imide, methyl methacrylate or mixtures thereof (graft shell) is grafted onto a rubber (graft base), the rubbers being present in the form of at least partly crosslinked particles having an average particle size of 0.05 to 5 µm, and

Bb) 0 to 80 parts by weight of one or more thermoplastic vinyl copolymers

and/or the usual additives,

0.2 to 5% by weight of a polyalkylene ether modified with 5 to 0.05% by weight (based on the quantity of polyalkylene ether) being added to 99.8 to 95% by weight of a mixture I and the radical former decomposing into radicals sufficiently quickly at temperatures of 20 to 200 °C, the polyalkylene ethers to be modified being reaction products of polyols and one or more alkylene oxides and having molecular weights of 500 to 15,000.

## Revendications

## Revendications pour les Etats contractants suivants : DE, FR, GB, IT, NL

**1.** Compositions thermoplastiques à mouler, consistant en

I 99,8 à 95 % en poids d'un mélange consistant en un polycarbonate aromatique, un polymère greffé et éventuellement un polymère vinylique thermoplastique et/ou les additifs usuels, et

II 0,2 à 5 % en poids d'un polyoxyalkylène (poly(éther d'alkylène)), qui est modifié à l'aide de 5 à 0,05 % en poids (sur la base de la quantité du polyoxyalkylène) d'un générateur de radicaux, lequel se décompose assez rapidement en des radicaux à des températures comprises entre 20 ° et 200 ° C, les poly(oxyalkylènes) à modifier étant des produits de réaction de polyols et d'un ou plusieurs oxyde(s) d'alkylène(s) et ayant des poids moléculaires compris entre 500 et 15 000, et le mélange I des polymères consistant en

A) 95 à 10 % en poids d'un polycarbonate aromatique thermoplastique ou d'un mélange de plusieurs polycarbonate(s) aromatique(s) ayant des poids moléculaires moyens en poids $\overline{M}_p$ compris entre 10 000 et 200 000, à base des diphénols de formule (II)

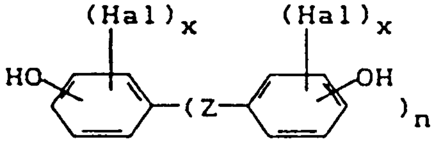

(II),

dans laquelle Z représente une liaison simple, un reste alkylène en $C_1$ à $C_5$, un reste alkylidène en $C_2$ à $C_5$, un reste cycloalkylidène en $C_5$ ou $C_6$, -S- ou $-SO_2-$, Hal représente un atome de chlore ou de brome, x vaut 0, 1 ou 2, et n vaut 1 ou 0, et éventuellement de formule (IIa)

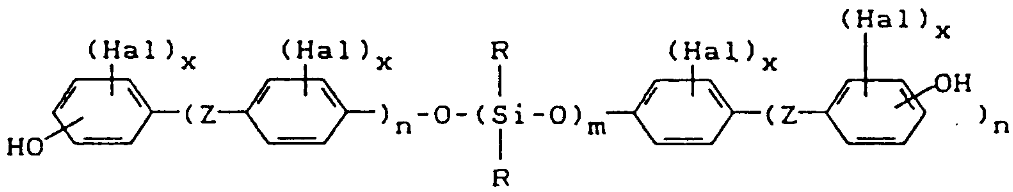

(IIa)

dans laquelle Z, Hal, x et n ont le sens indiqué pour la formule (II), et les restes R sont identiques ou différents et représentent chacun un groupe alkyle linéaire en $C_1$ à $C_{20}$, un groupe alkyle ramifié en $C_3$ à $C_{20}$, un groupe aryle en $C_6$ à $C_{20}$, et m est un nombre entier valant 5 à 100, les diphénols de formule (IIa) n'étant utilisés que pour la préparation de copolycarbonates avec les diphénols de formule (II), et leurs proportions pondérales dans les copolycarbonates étant de 1 à 20 % en poids, chaque fois sur la base du poids total des diphénols répondant aux formules (II) et (IIa),

B) 5 à 90 % en poids d'un mélange de :

Ba) 100 à 20 parties en poids d'un ou plusieurs polymère(s) de greffage, dans lesquels sont polymérisés par greffage, sur un caoutchouc (base de greffage) du styrène, de l'α-méthylstyrène, le méthacrylate de méthyle ou un mélange formé de 95 à 50 % en poids de styrène, d'α-méthylstyrène, de styrène substitué dans le noyau, de méthacrylate de méthyle ou de leurs mélanges et de 5 à 50 % en poids d'acrylonitrile, de méthacrylonitrile, d'anhydride de l'acide maléique, de maléinimide substitué sur l'azote, de méthacrylate de méthyle ou de leurs mélanges (greffon), et les caoutchoucs étant présents sous forme de particules au moins partiellement réticulées ayant une grosseur moyenne de particule de 0,05 à 5 µm, et

Bb) 0 à 80 parties en poids d'un ou plusieurs copolymère(s) vinylique(s) thermoplastique(s).

**2.** Procédé pour traiter, afin de les rendre "antistatiques" (capables de ne pas accumuler de charges d'électricité statique) des mélanges d'un polycarbonate aromatique, d'un polymère greffé et éventuellement d'un polymère vinylique thermoplastique et/ou des additifs usuels selon la revendication 1, procédé caractérisé en ce que l'on introduit dans 99,8 à 95 % en poids d'un mélange I, 0,2 à 5 % en poids d'un polyoxyalkylène qui est modifié par 5 à 0,05 % en poids (sur la base de la quantité du polyoxyalkylène) d'un générateur de radicaux, et l'on provoque une décomposition assez rapide du générateur de radicaux, à des températures comprises entre 20 et 200 °C, pour former des radicaux, les polyoxyalkylènes à modifier étant des produits de la réaction de polyols, et d'un ou plusieurs oxyde(s) d'alkylène(s), et ayant des poids moléculaire compris entre 500 et 15 000.

## Revendication pour l'Etat contractant suivant : ES

**1.** Procédé pour traiter, de manière à tes rendre résistant à une formation et une accumulation de charges d'étectricité statique (pour les rendre "antistatique") des mélanges I consistant en :

A) 95 à 10 % en poids d'un polycarbonate aromatique thermoplastique ou d'un mélange de plusieurs polycarbonate(s) aromatique(s) ayant des poids moléculaires moyens en poids $\overline{M}_p$ compris entre 10 000 et 200 000, à base des diphénols de formule (II)

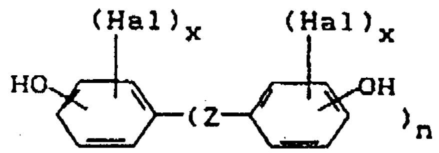

(II),

dans laquelle Z représente une liaison simple, un reste alkylène en $C_1$ à $C_5$, un reste alkylidène en $C_2$ à $C_5$, un reste cycloalkylidène en $C_5$ ou $C_6$, -S- ou $-SO_2-$, Hal représente un atome de chlore ou de brome, x vaut 0, 1 ou 2, et n vaut 1 ou 0, et éventuellement de formule (IIa)

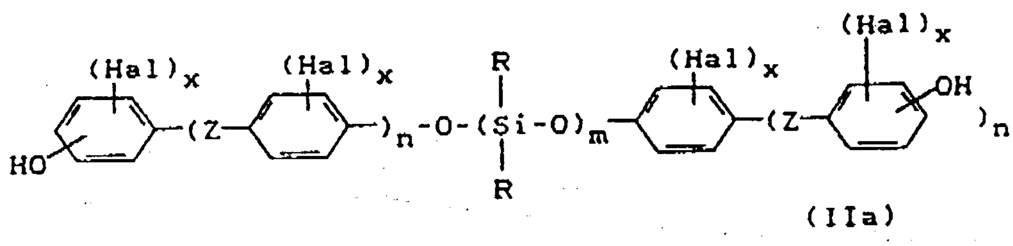

(IIa)

dans laquelle Z, Hal, x et n ont le sens indiqué pour la formule (II), et les restes R sont identiques ou différents et représentent chacun un groupe alkyle linéaire en $C_1$ à $C_{20}$, un groupe alkyle ramifié en $C_3$ à $C_{20}$, un groupe aryle en $C_6$ à $C_{20}$, et m est un nombre entier valant 5 à 100, les diphénols de formule (IIa) n'étant utilisés que pour la préparation de copolycarbonates avec les diphénols de formule (II), et leurs proportions pondérales dans les copolycarbonates étant de 1 à 20 % en poids, chaque fois sur la base du poids total des diphénols répondant aux formules (II) et (IIa),

B) 5 à 90 % en poids d'un mélange de :

Ba) 100 à 20 parties en poids d'un ou plusieurs polymère(s) de greffage, dans lesquels sont polymérisés par greffage, sur un caoutchouc (base de greffage) du styrène, de l'α-méthylstyrène, le méthacrylate de méthyle ou un mélange formé de 95 à 50 % en poids de styrène, d'α-méthylstyrène de styrène substitué dans le noyau, de méthacrylate de méthyle ou de leurs mélanges et de 5 à 50 % en poids d'acrylonitrile, de méthacrylonitrile, d'anhydride de l'acide maléique, de maléinimide substitué sur l'azote, de méthacrylate de méthyle ou de leurs mélanges (greffon), et les caoutchoucs étant présents sous forme de particules au moins partiellement réticulées ayant une grosseur moyenne de particule de 0,05 à 5 µm, et

Bb) 0 à 80 parties en poids d'un ou plusieurs copolymère(s) vinylique(s) thermoplastique(s),

et/ou avec les additifs usuels,

procédé selon lequel on introduit dans 99,8 à 95 % en poids d'un mélange I, 0,2 à 5 % en poids d'un polyoxyalkylène II qui est modifié par 5 à 0,5 % en poids (sur la base de la quantité du polyoxyalkyiène) d'un générateur de radicaux, et l'on provoque la décomposition assez rapide du générateur de radicaux à des températures comprises entre 20 et 200 °C, les polyoxyalkylènes à modifier étant des produits de la réaction de polyols et d'un ou plusieurs oxyde(s) d'alkylène(s) et ayant des poids moléculaires compris entre 500 et 15 000.